Europäisches Patentamt

European Patent Office

Office européen des brevets

(19)

(11) Veröffentlichungsnummer: **0 034 644**
**B1**

(12) **EUROPÄISCHE PATENTSCHRIFT**

(45) Veröffentlichungstag der Patentschrift:
12.09.84

(51) Int. Cl.³: **B 01 D 46/04**

(21) Anmeldenummer: **80103528.8**

(22) Anmeldetag: **24.06.80**

(54) **Druckgasanschluss bei Staubgasfiltern.**

(30) Priorität: **12.02.80 DE 3005146**

(43) Veröffentlichungstag der Anmeldung:
02.09.81 Patentblatt 81/35

(45) Bekanntmachung des Hinweises auf die Patenterteilung:
12.09.84 Patentblatt 84/37

(84) Benannte Vertragsstaaten:
**AT BE CH FR GB IT LI NL SE**

(56) Entgegenhaltungen:
**AU - B - 478 972**
**DE - A - 2 529 464**
**GB - A - 1 493 499**

**ZEMENT-KALK-GIPS, Band 31, Nr. 7, 1978 Wiesbaden H. MEYER ZU RIEMSLOH "Abreinigung von Faserstoffiltern durch Druckluft" Seiten 355 bis 359**

(73) Patentinhaber: **Intensiv-Filter GmbH & Co KG., Vosskuhlstrasse 63, D-5620 Velbert 11 (DE)**

(72) Erfinder: **Kordas, Friedel, Landschützstrasse 20b, D-4350 Recklinghausen (DE)**

(74) Vertreter: **Geiersbach, Walter, Dipl.-Ing., Wickrather Strasse 43, D-4000 Düsseldorf 11 (DE)**

## Beschreibung

Die Erfindung betrifft einen Druckgasanschluss einer als Zwei-Stufen-Injektor ausgebildeten Rückspüleinrichtung an die Druckgaszuführungsleitung bei Staubgasfiltern mit Injektoren, die mit ihren Anschlussmuffen abwechselnd mit Distanzhülsen an die Druckgaszuführungsleitung angeschlossen sind.

Bei Staubgasfiltern, die mit einer solchen Rückspüleinrichtung versehen sind, ist es erforderlich, jeden Injektor einzeln in möglichst gasdichter Ausführung an die Druckgaszuführungsleitung anzuschliessen.

Da insbesondere bei Grossfilteranlagen tausende von Injektoren anzuschliessen sind, ist hierfür aus wirtschaftlichen Gründen eine technisch wenig aufwendige und einfach zu handhabende Ausführung erwünscht. Weiterhin soll mit einfachsten Mitteln abgedichtet werden, weil die einzelnen Dichtungsmaterialien in ihrer Beständigkeit immer an die zu filternden Gase bzw. deren Betriebstemperatur angepasst werden müssen.

Der Erfindung liegt die Aufgabe zugrunde, einen schnell und einfach montierbaren Druckgasanschluss für Injektoren zu schaffen, bei dem keinerlei zusätzliche Dichtungen erforderlich sind.

Diese Aufgabe wird gemäss der Erfindung dadurch gelöst, dass die Anschlussmuffen der ersten Stufe der Injektoren abwechselnd mit den Distanzstücken, die als Distanzhülsen ausgebildet sind, auf die Druckgaszuführungsleitung aufgefädelt und gegeneinander verspannt sind.

Der damit erzielbare technische Fortschritt beruht auf folgenden Vorteilen. Durch die Verwendung der Druckgaszuführungsleitung als Basiselement für den Druckgasanschluss der Injektoren der ersten Stufe ist der Zusammenbau durch Auffädeln der Einzelteile auf dieses Basiselement denkbar einfach. Der Anschluss erfolgt mit nur einer einzigen Spanneinrichtung auch bei mehreren Injektoren (bei in der Praxis üblichen Filteranlagen sitzen bis zu zehn Injektoren auf einer Leitung). Als Spanneinrichtung kann eine einfach und ohne grossen technischen Aufwand herstellbare Schraubausführung verwendet werden. Für die Abdichtung sind keinerlei zusätzliche Dichtungen erforderlich, da die Abdichtung durch das Anpressen der Distanzhülsen an die Stirnflächen der Injektoranschlussmuffen erfolgt.

Der Erfindung ist in der Zeichnung an einem Ausführungsbeispiel veranschaulicht. Es zeigen:

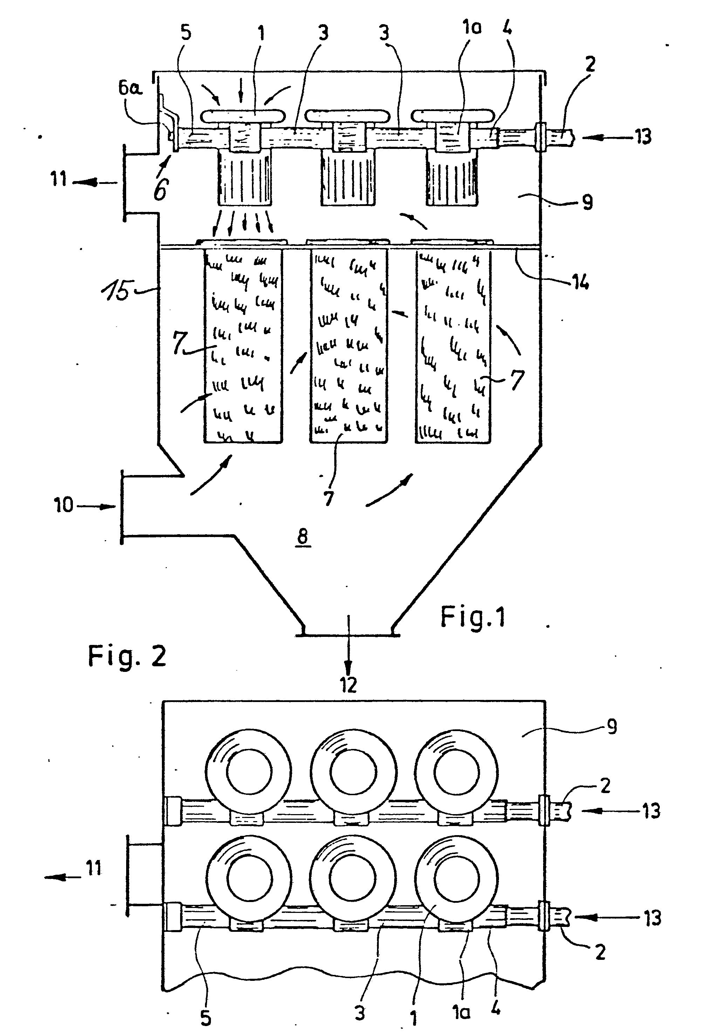

Fig. 1 ein Staubgasfilter im Querschnitt,

Fig. 2 das Staubgasfilter der Fig. 1 von oben gesehen in der Ebene unterhalb des oberen Deckels, teilweise weggebrochen und

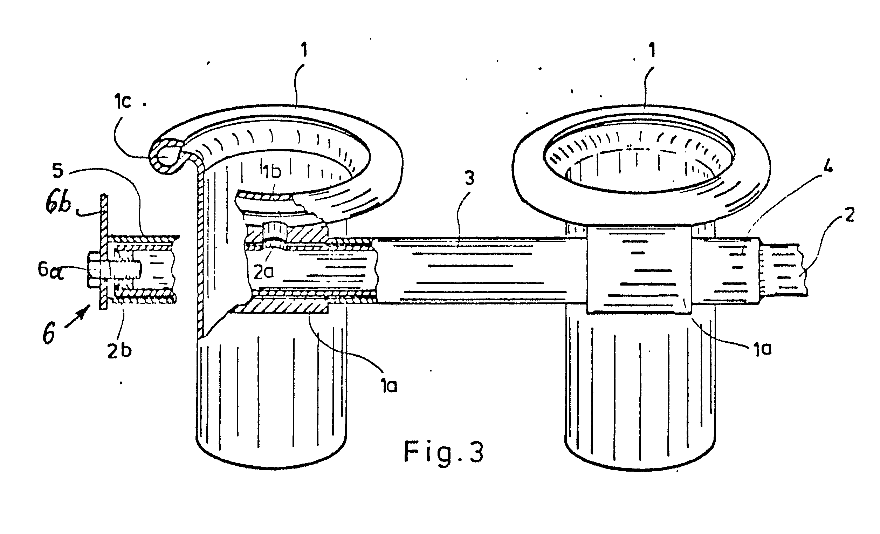

Fig. 3 zwei Injektoren mit den einzelnen Anbauteilen auf einer Druckgaszuführungsleitung aufgebaut, teilweise geschnitten.

In einem Gehäuse 15 mit einer Öffnung 10 für den Staubgaseintritt, einer Öffnung 11 für den Reingasaustritt und einer Einrichtung für den Staubabzug 12 sind Filterelemente 7 an einem zwischen Staubgasraum 8 und Reingasraum 9 angeordneten Trennboden 14 befestigt. Oberhalb der Filterelemente 7 ist die Rückspüleinrichtung mit einer Druckgaszuführungsleitung 2 angeordnet, auf der die Injektoren 1 der ersten Stufe mit Distanzhülsen 3, einer feststehenden Hülse 4 und einer beweglichen Endhülse 5 aufgebaut und mit einer Spanneinrichtung 6 zusammengehalten sind. Aus einer nicht weiter dargestellten Druckgaserzeugungsanlage und einer zugehörigen Steuereinrichtung 13 werden Druckgasimpulse erzeugt, die über die Druckgaszuführungsleitung 2 mit Hilfe der Injektoren 1 einen der Filterströmung entgegengesetzten Spülluftstrom bewirken, so dass der auf der äusseren Oberfläche der Filterelemente 7 anhaftende Staub abgeblasen wird, nach unten in den Trichter des Gehäuses 15 fällt und durch den Staubabzug 12 ausgetragen wird.

Gemäss der Erfindung sitzt auf der Druckgaszuführungsleitung 2 die feststehende Hülse 4, die mit der Leitung 2 gasdicht verbunden ist. Die Injektoren 1 sind mit ihren Anschlussmuffen 1a jeweils im Wechsel mit einer Distanzhülse 3 auf der Druckgaszuführungsleitung 2 so aufgereiht, dass die Druckgasaustrittsbohrung 2a der Leitung 2 und die Eintrittsbohrung 1b des Injektors 1 miteinander fluchten, um damit den Druckgaseintritt in den Ringkanal 1c des Injektors 1 zu ermöglichen.

Jeweils an dem letzten Injektor 1 wird eine bewegliche Endhülse 5 auf die Druckgaszuführungsleitung 2 aufgeschoben. Diese ist so beschaffen, dass sie die Leitung 2 um einen gewissen Betrag überragt. Damit ist es möglich, die mit den einzelnen Hülsen 3 und 5 aufgereihten Injektoren 1 mit der Spanneinrichtung 6 zusammenzuspannen. Die Spanneinrichtung 6 kann zweckmässigerweise aus einer normalen, im Maschinenbau gebräuchlichen Sechskantschraube bestehen, die in einen in der Druckgaszuführungsleitung 2 verankerten Stopfen 2b eingeschraubt ist und mit ihrem Kopf gegen ein Halteblech 6b gespannt ist. Die Anschlussmuffen 1a der Injektoren 1 und die Hülsen 3 und 5 sind in ihrem Innendurchmesser so gehalten, dass sie sich bei der Montage leicht über die Druckgaszuführungsleitung 2 schieben lassen. Um aus wirtschaftlichen Gründen die Spannbreite beim Zusammenspannen der Injektoren 1 mit den Hülsen 3 und 5 möglichst klein halten zu können und trotzdem noch die notwendige Dichtkraft für die Abdichtung an den Berührungsstellen zwischen den Anschlussmuffen 1a und den Enden der Hülsen 3 und 5 erhalten zu können, sind die Enden der Hülsen 3 und 5 und die Ränder der Bohrungen in den Injektormuffen 1a kegelförmig ausgebildet.

## Patentansprüche

1. Druckgasanschluss einer als Zwei-Stufen-Injektor ausgebildeten Rückspüleinrichtung an die Druckgaszuführungsleitung bei Staubgasfiltern mit Injektoren, die mit ihren Anschlussmuffen abwechselnd mit Distanzstücken an die Druckgaszuführungsleitung angeschlossen sind, dadurch gekennzeichnet, dass die Anschlussmuffen (1a) der ersten Stufe der Injektoren (1) abwechselnd mit den Distanzstücken, die als Distanzhülsen (3) ausgebildet sind, auf die Druckgaszuführungsleitung (2) aufgefädelt und gegeneinander verspannt sind.

2. Druckgasanschluss nach Anspruch 1, dadurch gekennzeichnet, dass die Distanzhülsen (3) einen Innendurchmesser haben, der etwas grösser ist als der Aussendurchmesser der Druckgaszuführungsleitung (2).

3. Druckgasanschluss nach Anspruch 1 oder 2, dadurch gekennzeichnet, dass auf dem einen Ende der Druckgaszuführungsleitung (2) eine feststehende Hülse (4) und auf dem anderen Ende der Druckgaszuführungsleitung (2) eine bewegliche Endhülse (5) aufgeschoben ist, die die Druckgaszuführungsleitung überragt und die mit einer die Anschlussmuffen (1a) und Distanzhülsen (3) in axialer Richtung gegen die feststehende Hülse (4) drückenden Spanneinrichtung (6) versehen ist.

4. Druckgasanschluss nach Anspruch 3, dadurch gekennzeichnet, dass die Spanneinrichtung (6) als Schraube ausgebildet ist, die mit ihrem Gewindeteil in einen Stopfen (2b) am Ende der Druckgaszuführungsleitung (2) eingeschraubt ist und mit ihrem Kopf gegen ein Halteblech (6b) gespannt ist, das sich am Ende der beweglichen Endhülse (5) abstützt.

5. Druckgasanschluss nach einem oder mehreren der Ansprüche 1 bis 4, dadurch gekennzeichnet, dass die Enden der feststehenden Hülsen (4), der Distanzhülsen (3) und der beweglichen Endhülsen (5) einerseits und die Ränder der Bohrungen der Anschlussmuffen (1a) anderseits kegelförmig ausgebildet sind.

**Claims**

1. Compressed gas attachment of a backwash device designed as a two-stage injector on the compressed gas line in dust gas filters with injectors, which with their connecting sleeves are alternately connected with spacing members to the compressed gas line, characterised in that the connecting sleeves (1a) of the first stage of the injectors (1) are, alternately with the spacing members formed as spacing sleeves (3), threaded and braced against one another on the compressed gas line (2).

2. Compressed gas attachment according to Claim 1, characterised in that the spacing sleeves (3) have an internal diameter that is somewhat larger than the external diameter of the compressed gas line (2).

3. Compressed gas attachment according to Claim 1 or 2, characterised in that a stationary sleeve (4) is inserted over one end of the compressed gas line (2) and a moveable end sleeve (5) is inserted over the other end of the compressed gas line (2), which end sleeve projects beyond the compressed gas line and is provided with a clamping device (6) compressing the connecting sleeves (1a) and spacing sleeves (3) in the axial direction against the stationary sleeve (4).

4. Compressed gas attachment according to Claim 3, characterised in that the clamping device (6) is formed as a screw which is screwed with its threaded part into a stopper (2b) at the end of the compressed gas line (2), and with its head is clamped against a metal retaining sheet (6b) supported at the end of the moveable end sleeve (5).

5. Compressed gas sleeve according to one or more of Claims 1 to 4, characterised in that the ends of the stationary sleeves (4), spacing sleeves (3) and moveable end sleeves (5) on the one hand, and the edges of the bores of the connecting sleeves (1a) on the other hand, are conically shaped.

**Revendications**

1. Distribution de gaz comprimé pour dispositif de balayage à contre-courant réalisé sous forme d'injecteurs à deux étages sur une conduite d'amenée de gaz comprimé dans les filtres à poussière munis d'injecteurs qui avec leurs manchons de raccordement sont reliés alternativement avec des pièces d'écartement à la conduite d'amenée de gaz comprimé, caractérisée en ce que les manchons de raccordement (1a) du premier étage d'injecteurs (1) sont enfilés alternativement avec des pièces d'écartement réalisés en tant que douilles d'écartement (3) et serrés les uns contre les autres sur la conduite (2) d'amenée de gaz comprimé.

2. Distribution de gaz comprimé selon la revendication 1, caractérisée en ce que les douilles d'écartement (3) présentent un diamètre inférieur qui est un peu plus grand que le diamètre extérieur de la conduite (2) d'amenée de gaz comprimé.

3. Distribution de gaz comprimé selon les revendications 1 ou 2, caractérisée en ce qu'une douille (4) fixe est glissée sur l'une des extrémités de la conduite (2) d'amenée de gaz comprimé et sur l'autre extrémité de la conduite (2) d'amenée de gaz comprimé est glissée une douille d'extrémité (5) mobile formant une saillie par rapport à la conduite (2) d'amenée de gaz comprimé, douille d'extrémité qui est munie d'un dispositif de serrage (6) serrant dans le sens axial les manchons de raccordement (1a) et les douilles d'écartement (3) contre la douille fixe (4).

4. Distribution de gaz comprimé selon la revendication 3, caractérisée en ce que le dispositif de serrage (6) est réalisé en tant que vis qui est vissée par sa partie filetée dans un bouchon (2b) à l'extrémité de la conduite (2) d'amenée de gaz comprimé, vis serrée avec sa tête contre une plaque métallique de retenue (6b) qui prend appui sur l'extrémité de la douille d'extrémité mobile (5).

5. Distribution de gaz comprimé selon l'une ou plusieurs des revendications 1 à 4, caractérisée en ce que les extrémités des douilles fixes (4), des douilles d'écartement (3) et des douilles d'extrémité mobiles (5) d'une part, et les bordures des alésages des manchons de raccordement (1a) d'autre part, sont réalisées en forme de cône.

Fig.1

Fig. 2

Fig.3